(19)

Europäisches
Patentamt
European
Patent Office
Office européen
des brevets

(11) **EP 4 664 104 A1**

(12) **EUROPEAN PATENT APPLICATION**

(43) Date of publication:
**17.12.2025 Bulletin 2025/51**

(21) Application number: **25182361.3**

(22) Date of filing: **12.06.2025**

(51) International Patent Classification (IPC):
**G01N 29/024** (2006.01)     **B06B 1/06** (2006.01)
**G10K 9/125** (2006.01)     **G01N 29/07** (2006.01)
**G01N 29/06** (2006.01)     **G01N 29/26** (2006.01)
**G10K 11/34** (2006.01)     **G01N 29/04** (2006.01)

(52) Cooperative Patent Classification (CPC):
**G01N 29/024; B06B 1/0625; G01N 29/043;
G01N 29/0654; G01N 29/069; G01N 29/07;
G01N 29/262; G10K 9/125; G10K 11/34**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.06.2024 GB 202408611**

(71) Applicant: **Darkvision Technologies Inc.
North Vancouver, BC V7M 3G3 (CA)**

(72) Inventors:
• **DA COSTA FILHO, Carelos Alberto
North Vancouver, V7M 3G3 (CA)**
• **D'SOUZA, Derrell
North Vancouver, V7M 3G3 (CA)**

(74) Representative: **Ter Meer Steinmeister & Partner
Patentanwälte mbB
Nymphenburger Straße 4
80335 München (DE)**

(54) **DETERMINATION OF SPEEDS OF SOUND IN MEDIA**

(57)     A non-destructive testing device with an ultrasonic transducer array inspects objects carrying a fluid. Ultrasound reflections are stored in the device and processed to create images of the object. A processor estimates the speed of sound of the fluid by trying values for the sound speed and for each value: makes images from the reflections, calculate geometric parameters for the object from the images, and calculate a metric for how much the parameters vary. The estimated speed of sound is associate with the optimized metric.

FIG. 1

EP 4 664 104 A1

## Description

## Technical Field

The disclosure pertains to the field of acoustics. Aspects of the disclosure relate to methods of operation of an ultrasonic transducer array including receiving ultrasonic signals propagating through a medium from a tubular and using geometric parameters from the tubular to determine physical properties of the medium and tubular.

## BACKGROUND

Inspection devices are often deployed in conduits, wellbores, pipes, and other confined spaces to inspect the condition of the enclosure. For example, hydrocarbons in production casings may contaminate groundwater if there are cracks or deformations in the casing. A water or oil pipeline above ground may have defects that lead to a leak. High-resolution images of the enclosing structure are helpful to many technical processes that detect such defects, which may require intervention to fix.

Ultrasonic imaging is a common technique to inspect such targets and uses the fluids carried therewithin to transmit the acoustic waves and reflections. However, creating high-resolution images relies on an accurate knowledge of the speed of sound of that fluid, which can only be estimated from a guess at the fluid in different parts of the tubular.

## SUMMARY

A method of operation for an ultrasonic inspection system, the method including transmitting a plurality of ultrasonic pulses in a plurality of directions from an ultrasonic transducer array and receiving a plurality of reflections from a target. A respective reflection in the plurality of reflections corresponds to at least one respective pulse in the plurality of pulses. For a plurality of trial values for the speed of sound, and until a termination condition is met, the method includes selecting an instant trial value from amongst the plurality of trial values for the speed of sound, creating a plurality of images from the plurality of reflections and the instant value from the plurality of trial values for the speed of sound, wherein a respective image corresponds with a respective direction in the plurality of directions, extracting from the plurality of images a plurality of geometric parameters for the target, and computing a deviation metric amongst the plurality of geometric parameters. The method further includes returning an optimal value for the speed of sound from amongst the plurality of trial values for the speed of sound, wherein the optimal value for the speed of sound optimizes the deviation metric.

A system for ultrasonic inspection comprising an inspection probe having an ultrasonic transducer array and on-tool processor programmed to cause the ultrasonic transducer array to: a) transmit a first plurality of ultrasonic pulses in a first plurality of directions; b) receive a first plurality of reflections from a first sector of a target, wherein a respective reflection in the first plurality of reflections corresponds to at least one respective pulse in the first plurality of ultrasonic pulses; and c) store the first plurality of reflections. The system comprises at least one non-transitory storage device communicatively coupled to at least one processor and which stores processor-executable instructions, which cause the at least one processor to iterate over at least two trial values for the speed of sound and in each respective iteration: i) select an instant trial value for the speed of sound from amongst the at least two trial values for the speed of sound, ii) create a plurality of images from the first plurality of reflections and the instant trial value from the speed of sound, wherein a respective image corresponds with a respective direction in the first plurality of directions, iii) extract from the plurality of images a plurality of geometric parameters for the first sector of the target, and iv) compute a deviation metric amongst the plurality of geometric parameters.

The storage device stores processor-executable instructions which when executed cause the ultrasonic transducer array to transmit a first plurality of ultrasonic pulses in a first plurality of directions, and receive a first plurality of reflections from a first sector of a target. A respective reflection in the first plurality of reflections corresponds to at least one respective pulse in the first plurality of pulses. The storage device stores processor-executable instructions which when executed cause the at least one processor to iterate over at least two trial values for the speed of sound. In each respective iteration, the instructions cause the processor to select an instant trial value for the speed of sound from amongst the at least two trial values for the speed of sound, and create a plurality of images from the first plurality of reflections and the instant trial value from the speed of sound. A respective image corresponds with a respective direction in the first plurality of directions. In each respective iteration, the instructions cause the processor to extract from the plurality of images a plurality of geometric parameters for the first sector of the target, and compute a deviation metric amongst the plurality of geometric parameters.

This summary does not necessarily describe the entire scope of all aspects. Other aspects, features, and advantages will be apparent to those of ordinary skill in the art upon review of the following description of specific embodiments.

## BRIEF DESCRIPTION OF THE DRAWINGS

Systems, devices, articles, and methods are described in greater detail herein with reference to the following figures in which:

FIG. 1 is a technical diagram illustrating, in perspective view, an inspection tool including an ultrasound transducer array in proximity with a tubular;

FIG. 2 is a technical diagram illustrating, in a sectional view, an inspection tool having several ultrasound transducer arrays;

FIG. 3 illustrates, in a schematic view, a plurality of circuits for use with the probe;

FIG. 4 illustrates, a flow chart, an implementation of a method of operation of a probe;

FIG. 5 illustrates an implementation of a method of operation of a probe;

FIG. 6 illustrates an implementation of a method of operation of a probe;

FIG. 7A and FIG. 7B illustrate implementations of method of operation of a probe;

FIG. 8 illustrates examples of geometric features extracted from an image formed from reflections received by a probe; and

FIG. 9A and FIG. 9B illustrate examples of deviation metrics over a plurality of trial values for the speed of sound.

In the drawings, the same reference numbers identify similar elements or acts. In the drawings, angle, size, and relative position of elements are not necessarily shown to scale. For example, some of these elements may be enlarged or positioned to improve drawing legibility. Further, the shapes of any elements as drawn, are not necessarily intended to convey any information regarding the actual shape of the particular elements and may have been solely selected for ease of illustration or recognition.

**DETAILED DESCRIPTION**

Ultrasonic inspection of tubulars, such as pipelines, liners and casings, requires a coupling liquid, typically the oil or water flowing in the tubular. Accurate determination of the speed of sound (SoS) affects the quality of images and other concrete results generated from data collected by an ultrasound probe. However, not only are the liquids comprised of uncertain components, the instantaneous SoS of the assumed liquid may vary throughout the length of the tubular. Indeed, an incorrect assumption of the speed of sound affects the usefulness of a probe used in commercial, safety, and technical scenarios such as In-Line Inspections (ILI). Incorrect speed of sound values introduces geometrical distortions, misplaces tubulars in reconstructions of the space, or otherwise hinders accurate characterization of the tubular's structure or material properties. In this technical process, flaws may be mischaracterized in nature, size, and location or missed altogether.

The applicant appreciates that the process to beamform, generating visual representations of the physical distribution of acoustic signals (e.g., reflections), is a technical activity using specialized apparatuses and methods. The applicant further appreciates that other novel and inventive methods have failed including one based on overall image similarity. Applicant tested a plurality of velocity values that maximize a similarity metric between a plurality of beamformed images acquired using different transmit angles. The transmit directions of signals (equivalently the normal to the wavefronts of the signal) emitted by a transducer array is a plurality of angles. The hypothesis is that at the true SoS velocity, the metric shows maximal alignment and consistency of the spatial information in the images regardless of the transmit angle.

The results were unexpectedly disappointing. Exemplary metrics include cosine similarity on various aspects of the image, e.g., the real part, or envelope of the complex beamformed images. The process includes the calculation of a normalized inner product between two images. In the case of three transmit angles (for example, -20°, 0°, +20°), the applicants tested a similarity metric based on the average of the pairwise similarities between images corresponding to different angles. For some pairs of transmit angles widely differing in direction, the pairwise metrics were excluded from the average. This method, e.g., with cosine similarity, did not work for the following suspected reasons or conditions: low signal-to-noise in the images, the presence of image artifacts, when the aperture is limited, or when there are other nearer unexpected tubulars in view. Further, the method didn't produce a sufficiently strong gradient to allow for automated or adaptive techniques.

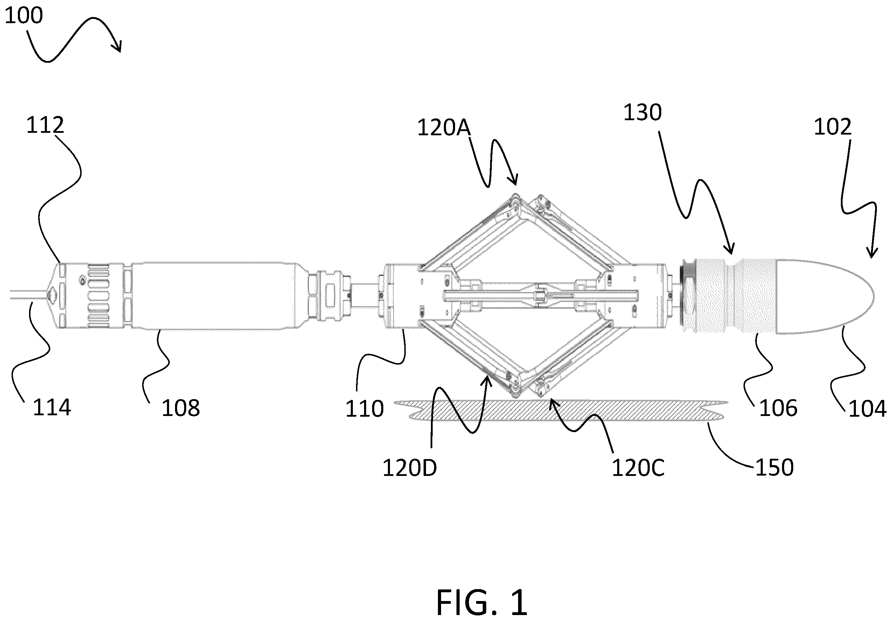

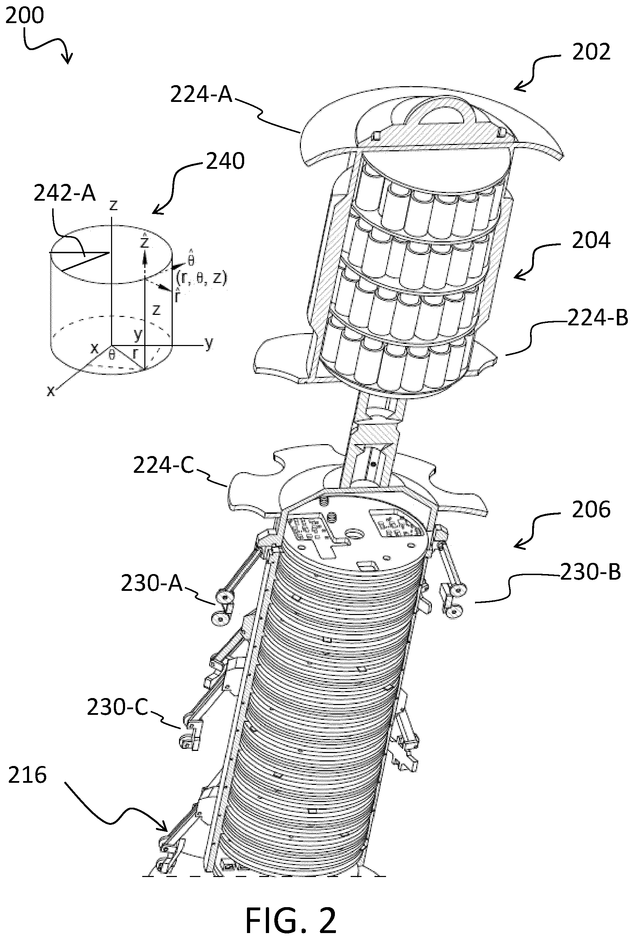

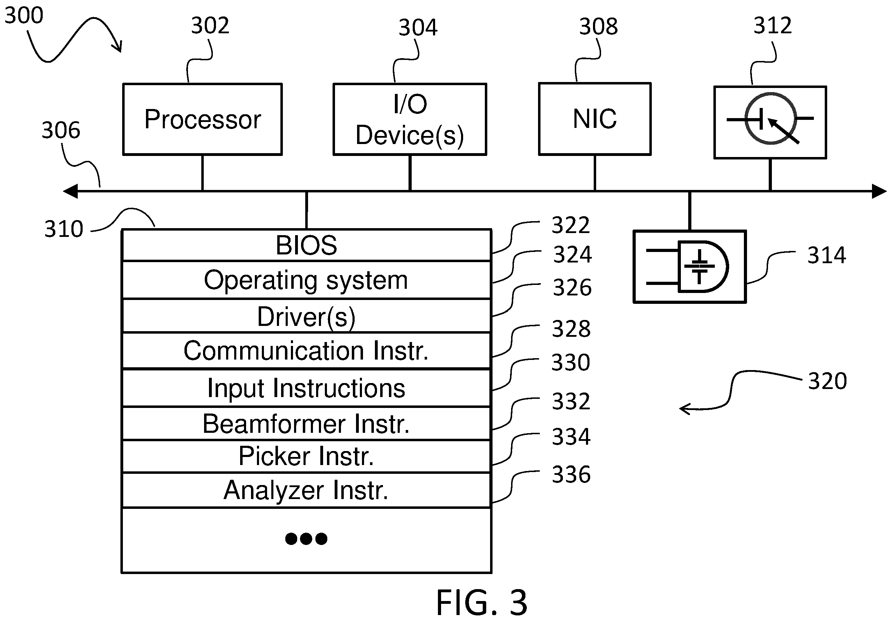

As will be explained in detail in the drawings and accompanying text (e.g., description, claims) applicant has presented novel and technical systems, devices, articles of manufacture, and methods to determine the speed of sound and improve the operation of ultrasonic probes. Looking at the drawings in overview, note the following. FIG. 1 illustrates a probe **100** including a transducer array. FIG. 2 illustrates the transducer array and an enclosed space. FIG. 3 illustrates a plurality of circuits for use in probe **100**.

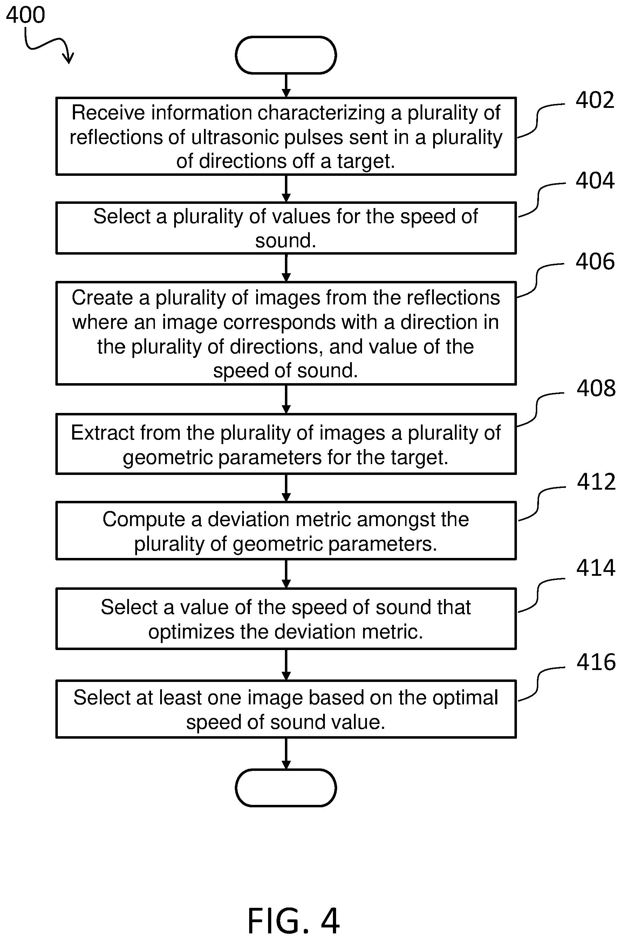

Various drawings illustrate aspects of the operation of a probe and a processor-based device. Looking at the drawings in overview, note the following. FIG. 4, FIG. 5, FIG. 6, and FIG. 7 illustrate example methods for use with a probe such as a probe including an ultrasonic array.

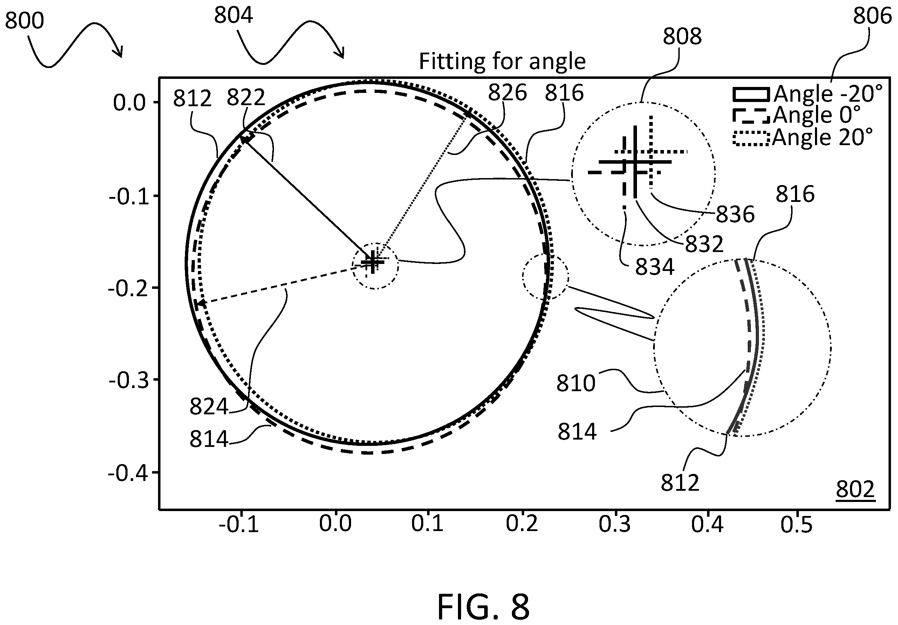

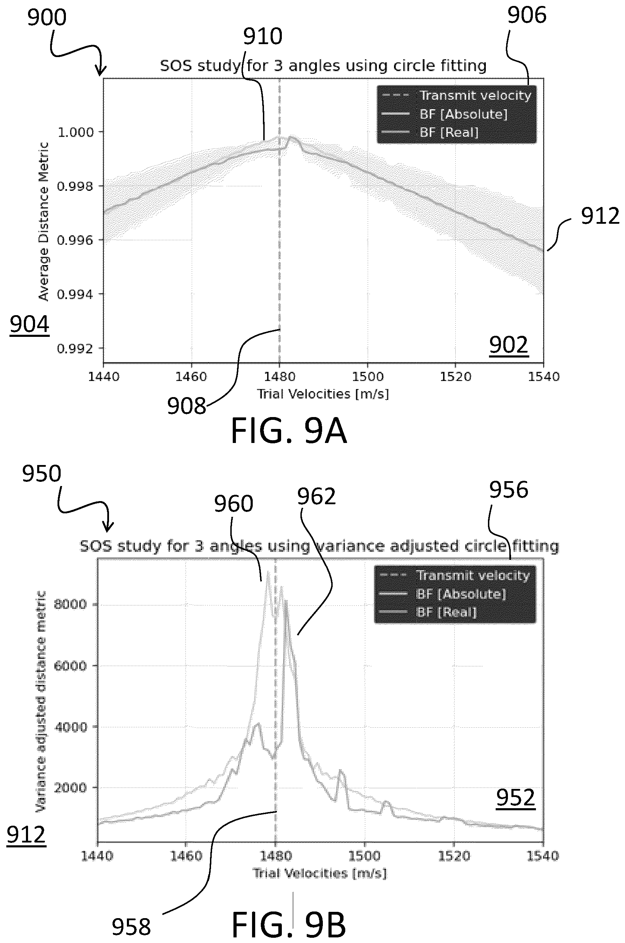

Various drawings illustrate aspects of the results of the operation of a probe and a processor-based device in accordance with embodiments of the invention. FIG. 8 illustrates examples of geometric features of extracted from an image. FIG. 9 illustrates examples of deviation metrics over a plurality of trial values for the speed of sound.

Turning to FIG. 1. In some embodiments, probe **100** is used to capture images and other physical measurements of material surrounding probe **100,** such as a tubular - *e.g.*, casings, conduits, junctions, liners, pipes, tubulars, valves, and the like, in situ. FIG. 1 illustrates probe **100,** including a transducer array which in operation provides images of material surrounding probe **100**. In some embodiments, probe **100** includes, at a distal end, a head **102** coupled to a first body **104**; and an imager frame or imager housing **106** coupled to first body **104** and electronics bay **108**. In some embodiments, probe **100** includes a second body **110** coupled to electronics bay **108**. Probe **100** may have further components before a proximal end **112**. Probe **100** may be coupled to wireline **114** to move the probe through the tubular.

In some embodiments, head **102** is shaped for probe **100** to traverse a passage e.g., a passage including a fluid. Head **102** may be a shaped mass or include instruments such as a forward-looking imager. In some embodiments, head **102** is coupler to another tool (not shown), e.g., various tools or probes are daisy-chained.

In some embodiments, probe **100** includes a plurality of centralizers, which extend from probe **100** and, in normal operation, abut the inner surface of the tubular. A centralizer is a device used to bias to a middling position or centralize a piece of equipment, such as probe **100**. For example, a centralizer may position a device in a middling position within a casing. The plurality of centralizers includes one or more springs to bias probe into the middle of the surrounding material. In some embodiments, probe **100** includes a first plurality of centralizers **120** including two vanes per centralizer. Plurality of centralizers **120** includes centralizer **120A,** centralizer **120B** and the like spaced apart in the azimuthal, e.g., evenly spaced apart, unevenly spaced, pairs in opposite directions with even intra pair spacing and (un)even inter pair spacing. In some embodiments, centralizer **120A** is opposite centralizer **120C.**

One or more centralizers in plurality of centralizers **120** may be in contact with an enclosure **150.** Examples of enclosures include casings, conduits, junctions, liners, pipes, tubulars, valves, and the like, in situ. A tubular is a body in the form of a pipe or tube. A tubular may be further characterized as round/elliptical in cross-section (e.g., cylindrical) hollow, and open at one or both ends.

In some embodiments, probe **100** includes an imager housing **106.** For example, located proximal to head **102.** The imager housing **106** includes an ultrasound transducer array **130,** which array may have a cylindrical shell shape (e.g., ring, band, barrel, or collar) or a truncate frustum. The imager housing **106** includes a plurality of transducer elements distributed circumferentially in an array, and operable as a phased array.

In some embodiments, the transducer array **130** is a radial imager transducer array that emits acoustic waves in a plurality of directions at or near right angles to the principal axis of probe **100**. In some embodiments, transducer array has a cylindrical shell shape.

In some embodiments, transducer array includes 32 to 2048 transducers arranged in an annular shape. The transducer array more preferably includes 128 to 512 transducers. In some embodiments, the transducer array includes 384 transducers. The transducer array operates in a frequency of 0.1 to 30 MHz, and more preferably 1 to 10 MHz. In some embodiments, transducer array operates at 5 MHz. Transducer array may include piezoelectric composites, such as lead zirconate titanate (PbZT), or compositions of bismuth scandium oxide and lead(II) titanate such as 0.36BiScO3-0.64PbTiO3. In some embodiments, the transducers are Piezoelectric Micromachined Ultrasonic Transducers (PMUT).

In some embodiments, electronics bay **108** is proximally disposed and coupled to imager housing **106**. In some embodiments, electronics bay **108** includes suitable electronic components for probe **100**, such as a power supply (e.g., battery, transformer, wire to external supply), a communication system, an image processor, an inertial measurement unit, and a data logger. Electronics bay **108** may include suitable electronics that in response to control signals, e.g., generated by a microcontroller executing processor-executable instructions, transmit and receive ultrasound pulses, adjust the absolute or relative time of transmissions, modulate transmissions, convert analog signals into digital signals, record data, and process the received pulses. The electronics in electronics bay **108** can run in one or more modes including a plurality of modes at the same time such as B-mode (brightness mode) to obtain an image of the surrounding structures or D-mode (Doppler mode) to obtain information on fluid flow. The electronics preferably generates transmit delay signals to the ultrasound array calculated to transmit the pulse as a plane wave, such that the target is insonified over a wide, unfocused area. The plane wave may take the form of an arc in the case where the target has a curved shape, such as the elliptical/circular shape of a tubular.

Turning to FIG. 2. which illustrates probe **200,** including plural transducer arrays **230A-C,** each of which in operation provides images of an arc section of the tubular. In some embodiments, probe **200** includes, at a distal end **202** coupled to a first body **204;** and an imager housing **206** coupled to first body **204.** In some embodiments, probe **200** includes an electronics bay (not shown) coupled to imager housing **206.** Imager housing **206** includes sensor arms **216** that are biased to extend the attached transducer arrays **230** away from the housing and into abutting the tubular. In embodiments, sensor arms **216** include sensors for providing sensor arm displacement values with respect to an imaging housing **206.** In some embodiments, each of the one or more transducer arrays **230A-C** include one or more spacing elements, such as wheels **250,** which abut the inner surface of the tubular and maintain a constant standoff distance from each array **230A-C** to said inner surface. Probe **200** may have further components as shown on the drawing sheet.

In some embodiments, probe **200** includes a plurality of transducer arrays **230,** for example, array **230A,** array **230B,** and so on. In some embodiments, each array is posed differently than another representative array. For example, the sensor arms and their arrays may be spaced apart on the major axis of probe **200,** with a different azimuthal position, or with a tilt. The directions used here are shown on the rose **240** in FIG. 2. Herein, r denotes the radial position from the origin, e.g., a point on a probe. The azimuthal direction is $\theta$. Herein, z is parallel to the major axis of the probe with distal being positive. These form a cylindrical coordinate system (r, $\theta$, z). Rose **240** includes a sector **242-A** including a plurality of connected azimuthal values. As shown on rose **240** a cartesian system (e.g., right-handed) can be also used where x is in zero of the azimuthal values.

The wavefront transmitted by transducer array(s) may be described as 'coherent,' 'weakly focused,' 'defocused,' 'unfocused,' 'plane wave', 'spherical', 'spiral', 'divergent,' or 'non-convergent' in as much as the transmitted waves may have some theoretical focal point within or behind the transducer. The transmitted waves may be a plane or curved wavefront, the former having a flat front and the latter having a front that is substantially curved or arc-shaped. Curved / arc-shaped waves can be seen as the polar coordinate equivalent of planar waves. The transmitted wavefront from the transducer towards a curved target, such as a pipeline or casing, can be an arc, rather than a flat plane wave. These shapes are created by phase delays of the pulses emitted by each transducer element. Notably, these fronts do not converge or focus on the surface of the target but rather strike the surface of the target at an angle of incidence with respect to the normal of the surface. Preferably, a curved wavefront hits the inside of a tubular target at the same angle of incidence relative to the normal of the surface of the tubular along the whole area of sonification. In embodiments, multiple wavefronts with multiple transmission angles are used to generate multiple corresponding images of an at least partially overlapping region of the target object.

In some embodiments, probe **200** includes a plurality of centralizers **224** which extend from probe **200** and, in normal operation, abut the inner surface of the tubular. For example, centralizer **224A** and centralizer **224B** may position probe **200** within the center of a casing or pipeline, while the probe moves and wobbles therethrough.

FIG. 3 illustrates a schematic view of aspects of probe in accordance with some embodiments of the invention. In some embodiments, probe **100** includes a plurality of circuits **300.**

The plurality of circuits **300** includes a control subsystem that includes at least one processor **302,** at least one input/output (I/O) device **304,** and at least one bus **306** to which, or by which, at least one processor **302** and I/O device(s) **304** are communicatively coupled.

At least one processor **302** may be any logic processing unit, such as one or more microprocessors, central processing units (CPUs), digital signal processors (DSPs), graphics processing units (GPUs), application-specific integrated circuits (ASICs), programmable gate arrays (PGAs), programmed logic units (PLUs), and the like. Processor(s) **302** may be referred to in the singular, but may be two or more processors.

In some embodiments, I/O device(s) **304** includes one or more user interface input devices, such as a display a keyboard, a mouse, a microphone, and a camera. The one or more user interface input devices may be detachable. In some embodiments, I/O device(s) **304** includes one or more output devices, such as displays, speakers, and lights. In some embodiments, I/O device(s) **304** is a single light. The one or more output devices may be detachable. The input/output device(s) **304** may include one or more sensors (e.g., transducers, thermometers, force sensors, strain gauge, clock) and output devices (e.g., actuators, displays, lights).

The plurality of circuits **300** includes a network interface subsystem **308** communicatively coupled to bus(es) **306** and provides bi-directional communication to other systems (e.g., a system external to plurality of circuits **300**) by one or more network or non-network communication channel(s) (e.g., cable **114).** Network interface subsystem **308** includes circuitry. Network interface subsystem **308** may use communication protocols (e.g., FTP, HTTP, Web Services, and SOAP with XML) to effect bidirectional communication of information including processor-readable data, and processor-executable instructions.

The plurality of circuits **300** includes at least one nontransitory computer- or processor-readable storage device **310** coupled to bus(es) **306**. The at least one nontransitory computer- or processor-readable storage device **310** includes at least one nontransitory storage medium. In some embodiments, storage device(s) **310** includes two or more distinct devices. Storage device(s) **310** can, for example, include one or more volatile storage devices, for instance, random access memory (RAM), and one or more non-volatile storage devices, for instance read only memory (ROM), flash memory, magnetic hard disk (HDD), optical disk, solid state disk (SSD), and the like. A person of skill in the art will appreciate storage device(s) **310** may be implemented in a variety of ways such as a read-only memory (ROM), random access memory (RAM), a hard disk drive (HDD), a network drive, flash memory, digital versatile disk (DVD), any other forms of computer-readable memory or storage medium, and/or a combination thereof. Storage device(s) **310** can be read only or read-write as needed. Further, modern computer systems and techniques conflate volatile storage and non-volatile storage, for example, caching, using solid-state devices as hard drives, in-memory data processing, and the like. At least one storage device **310** may store on or within the included storage media processor-readable data, and/or processor-executable instructions.

The plurality of circuits **300** includes one or more power supplies **312**. In some embodiments, for example, power supply(ies) **312** are an external power supply (e.g., coupled through e **114**). In some embodiments, power supply(ies) **312** are an on-board power source(s), and could be located in electronics bay **108**. The on-board power sources can, for example, include one or more batteries, ultra-capacitors, or fuel cells, to independently power different components of probe **100** or plurality of circuits **300**.

The plurality of circuits **300** includes at least one transducer array **314**. In response to processor-executable instructions, transducer array(ies) **314** emits ultrasonic signals. These signals may be reflected or refracted by one or more tubulars to create echoes, returns or reflections, which are received by transducer array(ies) **314**. Examples of transducer array(ies) **314** are described herein including above including one or more transducer arrays **230**.

Storage device(s) **310** include or store processor-executable instructions and/or processor-readable data **320** associated with the operation of plurality of circuits **300,** probe **100,** and the like. In some embodiments, the processor-executable instructions and/or processor-readable data include a basic input/output system (BIOS) **322,** an operating system **324,** drivers **326,** communication instructions and data **328,** input instructions and data **330,** beamformer instructions and data **332,** picker instructions and data **334,** analyzer instructions and data **336,** and the like.

Exemplary operating systems **324** include ANDROID®, LINUX®, and WINDOWS®. The drivers **326** include processor-executable instructions and data that allow processor(s) **302** to control one or more components in plurality of circuitry **300**. The processor-executable communication instructions and data **328** include processor-executable instructions and data to implement communications between plurality of circuits **300** and another processor-based device through network interface subsystem **308.**

The processor-executable input instructions or data **330**, when executed, direct plurality of circuits **300** to process input from I/O device(s) **304**, transducer array(ies) **314**, or sensors included in a wider system, information that represents input stored on or in a storage device, e.g., storage device(s) **310**. In some embodiments, the processor-executable input instructions or data **330**, when executed, direct plurality of circuits **300** to provide a value of the speed of sound based on input from a thermometer. The value may be part (e.g., an inner value) of a plurality of trial values for the speed of sound. For example, processor(s) **302** may transform input from a thermometer, e.g., from probe **100,** by a quadratic velocity correction formula such as

$$1403.4 + 4.7\,T - 0.04\,T^2\ (m/s)$$

Similar formulas exist for different fluids, and for some common fluids with adjustments for pressure and purity. For example, water has a quadratic adjustment for temperature, cubic for salinity, and quartic for pressure. Thus Applicants appreciate the merit of searching over a plurality of values.

In some embodiments, the processor-executable input instructions or data **330**, when executed, direct plurality of circuits **300** to provide and/or transform information for output. For example, emit an ultrasonic signal in one or more modes including B-mode or D-mode.

The processor-executable beamformer instructions or data **332**, when executed, direct plurality of circuits **300** to process input from I/O device(s) **304**, transducer array(ies) **314**, sensors included in a wider system, or information that represents input stored on or in storage device(s) **310**. The processor-executable beamformer instructions or data **332**, when executed, direct plurality of circuits **300** to transform information characterizing reflections into one or more images. Beamformer instructions or data **332**, when executed, filter out spurious reflections from information characterizing reflections. In some embodiments, beamformer instructions **332** includes processor-executable instructions that, when executed, generate visual representations of the physical distribution of acoustic signals (e.g., reflections) and may encode information like signal strength.

The processor-executable picker instructions or data **334,** when executed, direct plurality of circuits **300** to identify geometric shapes in a plurality of images of the tubular. Examples of geometric parameters of a target include one or more of a center of a tubular, a curvature of a tubular, and the interior dimension of a tubular. The plurality of images may be provided by beamformer instructions or data **332** based on information from probe **100**, I/O device(s) **304**, transducer array(ies) **314,** or sensors included in a wider system. In some embodiments, picker instructions or data **334** includes processor-executable instructions that, when executed, identify or pick one or more geometric parameters that define the shape of the tubular, for example, the interior dimension of a tubular. A tubular may be treated as circular or elliptical (in cross-section), and these shapes can be parameterized by radius, Xcenter, Ycenter, aspect ratio parameters. Higher order formulas (splines, parabolas, etc.) may be used to define the tubular and this requires addition processing power to fit the data.

The processor-executable analyzer instructions or data **336,** when executed, direct plurality of circuits **300** to process input characterizing a plurality of images to determine a shape of the tubular. Analyzer instructions or data **336,** when executed, may direct plurality of circuits **300** to process information from probe **100,** I/O device(s) **304,** transducer array(ies) **314,** or sensors included in a wider system. Analyzer instructions or data **336,** when executed, may direct plurality of circuits **300** to process information generated by picker instructions or data **334.** In some embodiments, analyzer instructions or data **336** includes processor-executable instructions that, when executed, extract the speed of sound data for one or more media. In some embodiments, analyzer instructions or data **336** includes processor-executable instructions that, when executed, select one or more images based on the speed of sound data.

In some embodiments, one or more of processor-executable instructions **320** are executed by at least one processor in a system principally contained off-board of probe **100.** For example, a system includes a control subsystem that includes at least one processor, at least one input/output (I/O) device, a network interface subsystem, a tangible nontransitory computer- or processor-readable storage device, and at least one bus to which the proceeding are coupled. The processor(s) may execute processor-executable beamformer instructions or data, picker instructions or data, or analyzer instructions or data.

Turning to FIG. 4 which illustrates an example method **400** for use with a probe such as a probe including an ultrasonic array. Various embodiments of probe are described herein including in relation to FIG. 1 through FIG. 3. For example, see probe **100.**

FIG. 4 shows method **400** is executable by a controller, such as circuitry or at least one hardware processor, for the operation, or improvement in the operation, of a probe including an ultrasonic array. Method **400,** in part, describes how a controller may determine the speed of sound of media proximate to the probe, and, optionally, create data characterizing tubulars proximate to the probe.

Those of skill in the art will appreciate that other acts may be included, removed, and/or varied or performed in a different order to accommodate alternative implementations. Method **400** is described as being performed by a controller, for example, a controller subsystem or processor(s) **302** in plurality of circuits **300** in conjunction with other components, such as transducer array(ies) **314.** However, method **400** may be performed by multiple controllers or by another system. For example, the method may be performed by a computer separate from the probe or may be cloud computing.

For performing part or all of method **400,** the controller may be at least one hardware processor. A hardware processor may be any logic processing unit, such as one or more microprocessors, central processing units (CPUs), digital signal processors (DSPs), graphics processing units (GPUs), application-specific integrated circuits (ASICs), programmable gate arrays (PGAs), programmed logic units (PLUs), and the like. The hardware processor may be referred to herein by the singular, but may be two or more processors. See for example processor(s) **302.**

The hardware processor(s) may, for example, execute one or more sets of processor-executable instructions and/or data stored on one or more nontransitory processor-readable media. See for example processor-executable instructions and/or processor-readable data **320** stored on device(s) **310.** The hardware processor(s) may, for example, execute one or more of input instructions and data **330,** beamformer instructions and data **332,** picker instructions and data **334,** or analyzer instructions and data **336.**

Method **400** begins, for example, in response to an invocation by the controller. At **402,** the controller receives data characterizing a plurality of reflections off the walls of a tubular. The plurality of reflections corresponds to a plurality of ultrasonic pulses sent in a plurality of directions. At least one respective reflection in the plurality of reflections corresponds to a first direction in the plurality of directions. In some implementations, the waves generated by the ultrasonic pulses overlap over the same region of the tubular target.

At **404,** the controller selects a plurality of values for the speed of sound. For example, the controller may select a range stored as processor-readable data. For propagation of sound in water a suitable range for the plurality of values for the speed of sound may be 1440 m/s to 1540 m/s. A wider SoS range may be needed for hydrocarbons, which may include crude oil, diesel, LNG and mixtures of hydrocarbons. In some implementations, the controller selects a range and starting trial speed provided by the user through a User Interface. In some implementations, the controller selects a plurality of values for the speed of sound corresponding to known speeds for the liquid proximate to the probe or may select a recently computed value for the speed of sound. The controller can select a range of values surrounding an initial value based on one or more of a temperature value and a pressure value provided by probe **100** or one or more coupled sensors.

At **406,** the controller, for at least two values of the speed of sound in the plurality of values for the speed of sound, beamforms the reflection data to create a plurality of images, where an image corresponds with a direction in the plurality of directions and value of the speed of sound. In embodiments, the plurality of images includes subsets of multiple images that correspond with a same direction in the plurality of directions and a value of the speed of sound, the multiple images corresponding to images from reflections received at different ones of the transducer arrays. At **406,** in some embodiments, the controller accepts a plurality of samples that may be arranged as multi-dimensional data, e.g., array. For example, a first index corresponds to a transducer in the plurality of transducers. Associated with this transducer (and index) is a spatial location. A second index corresponds to the sample (e.g., inverse of eight times the carrier frequency) and thus signals at the second index show the time of flight of a reflection.

At **406,** in some embodiments, the controller computes for each location in the index space a delay value for each value of the plurality samples. Each delay value may be based on the speed of sound plus the transmit location, tubular location, and receive location. Note the transmit and receive locations may differ because of motion or crosstalk.

At **408,** the controller extracts from the plurality of images a plurality of geometric parameters for the tubular. In some implementations, the controller extracts from the plurality of images a spatially varying geometric parameter of the tubular and a spatially invariant geometric parameter of the tubular. In some embodiments, the controller extracts the plurality of geometric parameters further based on one or more sensor arm displacement values provided by one or more coupled sensors. In additional embodiments, the controller extracts the plurality of geometric parameters further based on multi-dimensional data, as described above, for extracting global values for the plurality of geometric parameters for each given trial value for a speed of sound, using in this manner samples from a plurality of transducers and their corresponding relative locations. An example of a spatially varying geometric parameter is the x-coordinate of the center of a tubular. An example of a spatially invariant geometric parameter is the radius of a tubular.

At **410** the controller computes a deviation metric amongst the plurality of geometric parameters. For example, the controller characterizes how different the images are based on the geometric parameters. In some implementations, the deviation metric is an average (e.g., mean, arithmetic mean, geometric mean) of a pairwise metric applied to the extracted parameters. Examples of the pairwise metric include a metric proportional to the differences in the spatially variant parameters. For example, differences in the position of the center of a circular enclosure. Other examples of the pairwise metric include a metric inversely proportional to the combined value of the spatially invariant parameters. For example, the sum of the radii extracted from each case. In some implementations the pairwise metric $D(\theta_1,\theta_2)$ is proportional to

$$[(x_2 - x_1)^2 + (y_2 - y_1)^2]^{1/2}$$

In some implementations, the pairwise metric $D(\theta_1,\theta_2)$ is proportional to

$$\frac{[(x_2 - x_1)^2 + (y_2 - y_1)^2]^{1/2}}{r_1 + r_2}$$

Where $r$ is radius, x and y are cartesian positions for the center and the subscripts are for different images based on different transmit angles.

In some implementations, the deviation metric $\overline{D}$ is proportional to an average of a pairwise metric applied to the extracted parameters. For example, proportional to

$$\frac{1}{N} \sum_{i,j} D\left(\theta_i, \theta_j\right)$$

Here i and j are angles and in some implementation pairs of angles, e.g., widely differing angles are excluded from the deviation metric $\overline{D}$. In some implementations, the deviation metric $\hat{D}$ is proportional to an average of a pairwise metric divided by a factor proportional to the variance in the pairwise metric values for all pairs allowed in the deviation metric. For example,

$$\frac{\overline{D}}{\frac{1}{N} \sum_{i,j} \left(\overline{D} - D\left(\theta_i, \theta_j\right)\right)^2}$$

Here the denominator is the variance $\sigma^2$ and in further implementation is the standard deviation $\sigma$, or values proportional to either.

At **412** the controller selects a value of the speed of sound that optimizes the deviation metric. In some implementations, the suitable optimization is a minimization.

At **414,** optionally, the controller selects at least one image based on the optimal speed of sound value. The image may be from a preferred transmission angle. In some implementations, the controller recreates the images based on the optimal speed of sound.

In some embodiments, method **400** is repeated to determine multiple values for the speed of sound for multiple imaged regions. For example, the controller may determine a first value for the speed of sound in media as described above and repeat the process to characterize a second speed of sound in an object, such as the tubular or conduit, from the plurality of reflections received off the target or object at step **402.**

Next, the controller selects a plurality of values for a second speed of sound similarly to step **404,** and corresponding to the speed of sound in the target or object. For example, a suitable range for the second speed of sound for a steel object may be 5600 m/s to 6300 m/s. The controller sets the speed of sound for the media based on the previously determined speed of sound value as selected in **412,**

Then, the controller, for the plurality of values for the second speed of sound creates a plurality of second images from the reflections where a second image corresponds with a direction in the plurality of directions, and value of the second speed of sound, similarly to **406.** In some embodiments, the controller, as described above, computes for each location in the index space a delay value for each value of the plurality samples. In some embodiments, the plurality of second images are generated for regions corresponding to the object or tubular.

The controller then extracts from the plurality of second images a plurality of second geometric parameters, similar to step **408**. In some implementations, the controller extracts from the plurality of second images a spatially varying geometric parameter of the tubular and a spatially invariant geometric parameter of the tubular. In some embodiments, subregions within the plurality of second images are identified, for example, each subregion corresponding to a different reverberation reflection from an object's inner diameter (ID) and outer diameter (OD), where different subsets of second geometric parameters are extracted for each subregion. In some embodiments, a single subregion within each second image is selected, the single subregion containing a first reflection of an outer diameter of the object.

Next the controller computes a second deviation metric amongst the plurality of second geometric parameters, similar to the above description in **410**. For example, the controller characterizes how different the images are based on the geometric parameters, where the images are obtained from different ones of the plurality of directions.

The controller then selects a value of the second speed of sound that optimizes the second deviation metric, as in **412**. In some implementations, the suitable optimization is a minimization.

Thereafter, the controller selects at least one second image based on the optimal second speed of sound value, as in **414**. The at least one second image may be from a preferred transmission angle.

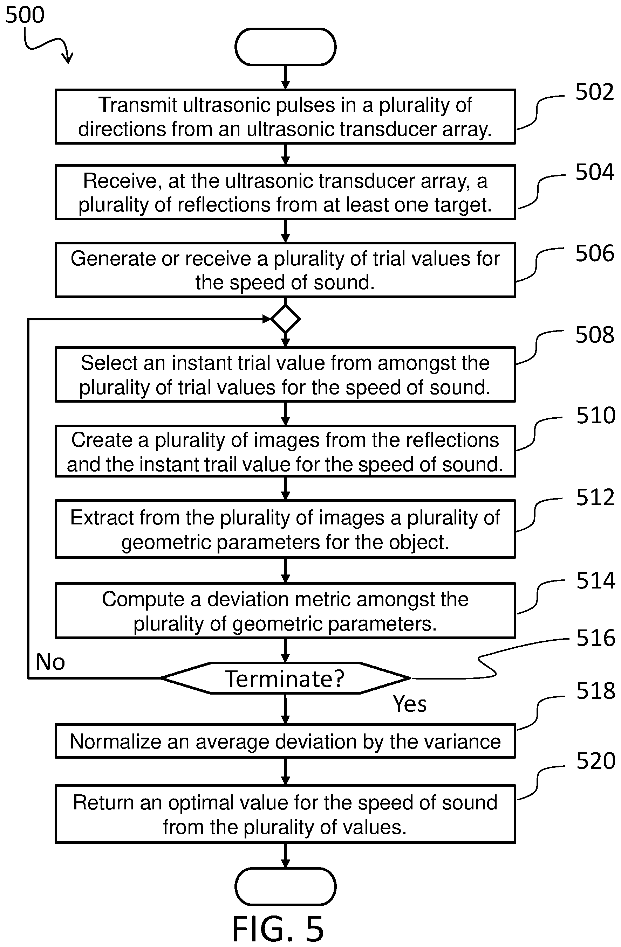

Turning to FIG. 5 which illustrates an example method **500** for the operation of a probe including an ultrasonic array such as those described herein including in relation to FIG. 1 through FIG. 3. Method **500** is executed by a controller, such as circuitry or at least one hardware processor, for the operation of a probe including an ultrasonic array. Method **500,** in part, describes how a controller may determine the speed of sound of media proximate to the probe, and, optionally, create data characterizing tubulars proximate to the probe.

For method **500,** as with other methods taught herein, the various acts may be performed in a different order than that illustrated and described. Additionally, the methods can omit some acts, combine acts, split an act, and/or employ additional acts.

Method **500,** as with other methods, taught herein, may be performed by a controller, for example, a controller subsystem or processor(s) **302** in plurality of circuits **300** in conjunction with other components, such as transducer array(ies) **314**. However, method **500** may be performed by multiple controllers or by another system.

Method **500** begins at **502** when the controller executes processor-executable instructions to transmit ultrasonic pulses in a plurality of directions from an ultrasonic transducer array. For example, the plurality of directions may be a plurality of azimuthal angles. In some implementations, the plurality of directions is a plurality with odd cardinality, e.g., $\{0, \pm a_1\}, \{0, \pm a_1, \pm a_2\}, \{-a_2, -a_1, 0, +b_1, +b_2\}$, where $a_i$ and $b_i$ are greater than zero. In some implementations, the plurality of directions is a plurality with even cardinality, *e.g.*, $\{\pm a_1\}, \{\pm a_1, \pm a_2\}, \{-a_2, -a_1, +b_1, +b_2\}$. In some implementations, the waves generated by the ultrasonic pulses overlap over the same region of the tubular target.

At **504** the controller receives, at the ultrasonic transducer array, a plurality of reflections from at least one tubular. The plurality of reflections, also called echoes or returns, are signals that are reflected back to a transducer after transmission, e.g., after **502.**

At **506** the controller generates, or receives, a plurality of trial values for the speed of sound. For the plurality of trial values for the speed of sound, the controller performs **508 - 516** (inclusive, even numbers only). The processor-executable instructions for **508 - 516** may be implemented by several control structures such as a do-while, for loop, and vectorized instructions.

At **508** the controller selects an instant trial value from amongst the plurality of trial values for the speed of sound. At **510** the controller creates a plurality of images from the reflections and the instant trail value for the speed of sound. A respective image in the plurality of images corresponds with a respective direction in the plurality of directions. Each image in the plurality of images is of the at least one tubular.

At **510** the controller engages in beamformation. This process involves providing solutions to a discretized wave equation. The wave equation is for a scalar pressure ($p$) value based on location (x), time (t), and source (S). In particular, if you have pressure values for locations and times you are solving for the source values. All solutions depend on the value of the speed of sound (c).

$$\nabla^2 p(\boldsymbol{x}, t) - \frac{1}{c^2}\frac{\partial^2}{\partial t^2} p(\boldsymbol{x}, t) = S(\boldsymbol{x}, t)$$

In embodiments, multiple values for the speed of sound (c) are used for multiple regions within the plurality of images, corresponding to locations of different materials such as one or more of a medium and an object.

At **512** the controller extracts from the plurality of images a plurality of geometric parameters for the tubular. For example, the controller extracts a spatially varying geometric parameter of the tubular and a spatially invariant geometric parameter of the tubular. In some embodiments, the controller extracts the plurality of geometric parameters further based on one or more sensor arm displacement values provided by one or more coupled sensors. In additional embodiments, the controller extracts the plurality of geometric parameters further based on multi-dimensional data, as described above, for extracting global values for the plurality of geometric parameters for each given trial value for a speed of sound, using in this manner samples from a plurality of transducers and their corresponding relative locations. The controller may extract the position of the center of a circular tubular (variant) and the radius of the tubular (invariant).

At **514** the controller computes a deviation metric amongst the plurality of geometric parameters. Suitable deviation metrics are described herein above in relation to, at least, FIG. 4.

At **516** the controller checks if method **500** is in or has met a termination condition. In some implementations, termination is based, at least in part, on run-time. In some implementations, termination is based, at least in part, on operating on a suitable number of values in the plurality of values for the speed of sound have been tested. In some implementations, all trial values in the plurality of values have been tested or skipped, e.g., adaptive step sizes are used, before termination. If **516-No,** then continue processing at **508.** If **516-Yes,** then continue at **518.**

At **518,** in some implementations, the controller normalizes the average deviation by the variance of the deviation. In some implementations, the controller computes an average value of a plurality of pairwise deviation metrics, e.g., the plurality of deviation metrics created in **508 - 514.** The average value may be used as a value to optimize over a plurality of trial values of the speed of sound. In some implementations, the controller computes a value proportional to the standard deviation value of the plurality of pairwise deviation metrics, e.g., standard deviation, or variance. The controller divides the average value of the plurality of pairwise deviation metrics by the value proportional standard deviation value of the plurality of pairwise deviation metrics. The normalized value or quotient may be used as a value to optimize over a plurality of trial values of the speed of sound. At **518,** in some implementations, the controller selects at least one image based on the optimal speed of sound value.

At **520,** the controller returns an optimal value for the speed of sound from the plurality of values. The optimal value is the value that optimizes the deviation metric. At **520,** in some implementations, the controller selects at least one image based on the optimal speed of sound value for the deviation metric, average pairwise deviation metric, or normalized deviation metric.

In some embodiments, method **500** is repeated for multiple regions to select multiple values for the speed of sound, for example, for a medium proximal to the probe and for an object proximal to the probe.

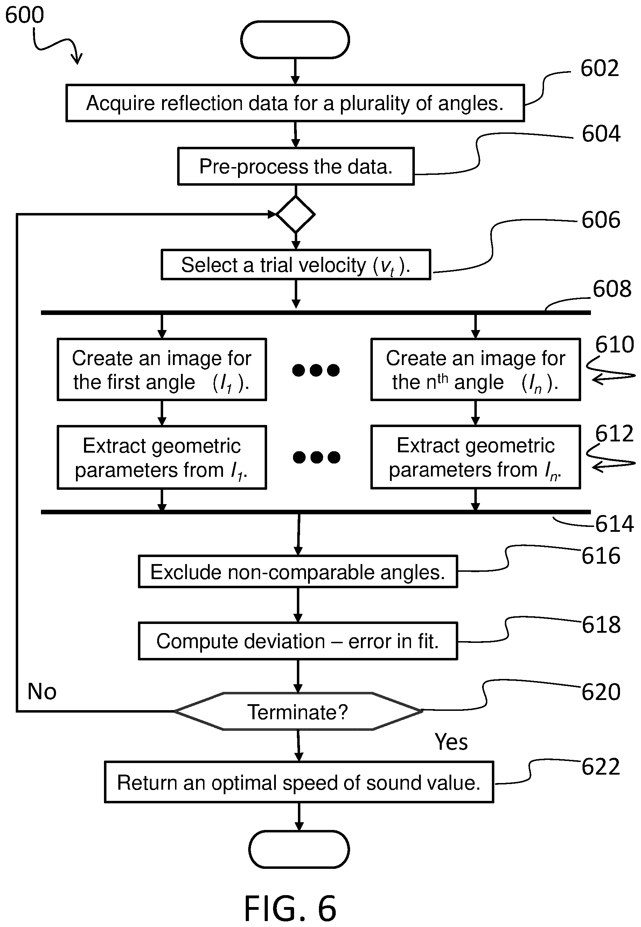

Turning to FIG. 6 which illustrates an example method **600** for the operation of a probe including an ultrasonic array such as probe **100.** Method **600** is executable by a controller, such as circuitry or at least one hardware processor, for the operation of a probe including an ultrasonic array. Method **600,** in part, describes how a controller may determine the speed of sound of media proximate to the probe, and, optionally, create data characterizing tubulars proximate to the probe, e.g., images.

Method **600** begins at **602.** The controller acquires reflection data for a plurality of angles. For example, probe **100** receives at an ultrasonic transducer array a plurality of reflections from the tubular. In some implementations, the reflection data for the plurality of angles arrives from an overlapping region of the tubular target.

At **604,** optionally, the controller executes processor-executable instructions to pre-process the reflection data. In some implementations, the controller extracts the real part of the signal, the imaginary part, the magnitude, or the phase information. In some implementations, at **604** the controller excludes reflections corresponding to an unlikely time of flight, e.g., a short time of flight, or a long time of flight. In some implementations, the controller excludes reflections corresponding to multiple echoes. In some implementations, at **604,** the controller applies an amplitude filter, for example, to eliminate spurious spikes that correspond to reflections that occur away from the inner wall.

Method **600** continues in a semi-parallelized plurality of iterations over **606 - 618** (inclusive, even numbers only) which may be implemented in different ways such as do-while, for-loop, or vectorized instructions. At **606** the controller selects a trial value for the speed of sound ($v_t$) from amongst a plurality of trial values for the speed of sound. At **608** the process forks.

At **610-1,** the controller creates a first image ($I_1$) including a representation of an tubular based on reflection data corresponding to the first angle ($I_1$). At **610-N,** the controller creates an nth image ($I_N$) including the tubular for the nth angle ($\theta_N$). The controller can compute an intermediary image ($I_i$) for an intermediary angle ($\theta_i$) - not shown. In some embodiments, each of the images ($I$) include a plurality of images based on reflection data from a plurality of transducers for each corresponding angle.

At **612-1,** the controller extracts a first plurality of geometric parameters ($L_1$) from the first image ($I_1$). At **612-N,** the controller extracts a nth plurality of geometric parameters ($L_n$) from the nth image ($I_N$). The controller can extract an immediate plurality of geometric parameters ($L_i$) from the intermediary image ($I_i$) - not shown. In some embodiments, the controller extracts the plurality of geometric parameters (L) further based on one or more sensor arm displacement values provided by one or more coupled sensors. In additional embodiments, the controller extracts the plurality of geometric parameters ($L_i$) further based on a plurality of images based on reflection data from a plurality of transducers for each corresponding angle. Method **600** continues at join **614.** In some embodiments, at least between fork **608** and join **614** method **600** runs in parallel.

At **616** the controller excludes pairwise comparisons that corresponds to incompatible angles. The incompatible angles could be acute, obtuse or reflex angle that correspond to directional differences over a threshold. For example, first respective direction (e.g., -20°) is incomparable with a second respective direction (e.g., +20°). The first respective direction (*e.g.*, -20°) and the second respective direction (*e.g.*, +20°) are comparable with a third direction (*e.g.*, 0°).

At **618** the controller computes error in fit amongst the plurality of geometric parameters. For example, the controller may compute a deviation metric described above between pairs of angles. In some implementations, the controller aggregates over the permissible or comparable pairs of angles.

At **620** the controller checks if method **600** is in or has met a termination condition. Suitable termination thresholds are described above. If **620-No,** then continue processing at **606.** If **620-Yes,** then continue at **622.**

At **622,** the controller returns an optimal speed of sound value.

In some embodiments, method **600** is repeated for multiple regions to select multiple values for the speed of sound, for example, for a medium proximal to the probe and for an object proximal to the probe.

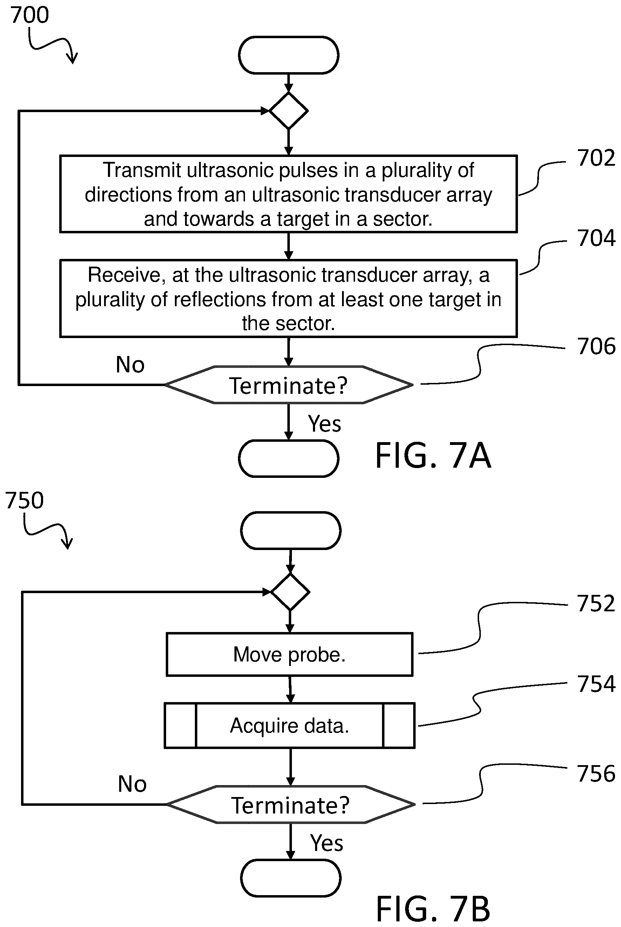

Turning to FIG. 7A which illustrates an example method **700** for the operation of a probe including an ultrasonic array such as probe **100.** Method **700** is executable by a controller, such as circuitry or at least one hardware processor, for the operation of a probe including an ultrasonic array. Method **700,** in part, describes how a controller may determine the speed of sound of media proximate to the probe in a plurality of directions and locations.

In some embodiments, the speed of sound may be isotropic varying with direction, e.g., up down, left, right. The present disclosure uses direction to refer to transmit angles. Direction also refers to the sector. A sector includes a plurality of connected azimuthal values, see for example a sector **242-A** in FIG. 2. In some implementations, two or more instances of methods **400, 500,** or **600** can be performed for a plurality of sectors.

In some embodiments, the speed of sound may vary with location or time. In some implementations, two or more instances of methods **400, 500,** or **600** can be performed for a plurality of times. If an instrument moves then a respective plurality of instances of methods **400, 500,** or **600** can provide a plurality of values for the speed of sound varying by location.

Method **700** begins at **702.** The controller executes processor-executable instructions to transmit ultrasonic pulses in a plurality of directions from an ultrasonic transducer array towards a tubular in a sector. For example, the plurality of directions may be all withing a plurality of azimuthal angles.

At **704** the controller receives, at the ultrasonic transducer array, a plurality of reflections from at least one target or the target in the sector. An example of a sector is shown in, at least, FIG. 2.

The controller acquires reflection data for a plurality of angles. For example, probe **100** receives at an ultrasonic transducer array a plurality of reflections from at least one tubular.

At **706** the controller checks if method **700** is in or has met a termination condition. If **706-No,** then continue processing at **702.** If **706-Yes,** then method 700 ends and processing can continue in one or more instances of methods **400, 500,** or **600.**

Turning to FIG. 7B which illustrates an example method **750** for the operation of a probe including an ultrasonic array such as probe **100.** Method **750** is executable by a controller, such as circuitry or at least one hardware processor, for the operation of a probe including an ultrasonic array. Method **750,** in part, describes how a controller may determine the speed of sound of media proximate to the probe in a plurality of directions locations.

In some embodiments, the speed of sound may vary with location or time. In some implementations, two or more instances of methods **400, 500, 600,** or **600** can be repeated. As the probe moves, a respective plurality of instances of methods **400, 500, 600,** or **700** can provide a plurality of values for the speed of sound varying by location. The SoS may vary along the tubular (along the Z-axis) or azimuthally around the probe (e.g. lighter fluids tend to rise above the probe).

Method **750** begins at **752.** The controller executes processor-executable instructions to optionally move the probe. At **754** the controller receives, at the ultrasonic transducer array, a plurality of reflections from at least one target. At **756** the controller checks if method **750** is in or has met a termination condition. If **706-No,** then continue processing at **702.** If **756-Yes,** then method **750** ends and processing can continue in one or more instances of methods **400, 500, 600,** or **700.**

FIG. 8 illustrates examples of geometric features extracted from an image formed from reflections received by a probe such as probe **100.** Graphic user interface **800** includes a plot **802,** a plurality of geometric features **804,** and a legend **806.**

Two areas of plot **802** are highlighted and shown in enlarged view in FIG. 8. A first area **808** show a plurality of centers of a tubular. A second area **810** shows a plurality of different circumferences of a tubular.

As shown in FIG. 8 the plurality of geometric features **804** includes a first set of features, a second set of features, and a third set of features. Each set of features corresponds to a different transmit direction. When the optimal value of the speed of sound is used to create the images from which the geometric features **804** are extracted the first set of features, second set of features, and third set of features are maximally aligned.

The first set of features includes a first circumference **812,** a first radius **822,** and a first center **832.** The first radius **822** is an example of a spatially invariant feature. The first center **832** and first circumference **812** are spatially variant. The second set of features including a second circumference **814,** a second radius **822,** and a second center **834.** The third set of features including a third circumference **814,** a third radius **822,** and a third center **834.**

When the optimal value of the speed of sound is used to create the images the transmit angle has less effect on the plurality of geometric features **804.** For example, first circumference **812,** second circumference **814,** and third circumference **816** are more aligned. For example, first center **832,** second center **834,** and third center **836** are more aligned.

FIG. 9A illustrates a first example of a deviation metric over a plurality of trial values for the speed of sound. Graphic user interface **900** includes a plot **902,** a plurality of values for the deviation metric **904,** and a legend **906.** The deviation metric shown is an average value of a plurality of pairwise deviation metrics.

As indicated in legend **906** the known transmit velocity is show as a vertical reference line **908.** The legend **906** indicates a first plurality of values for a deviation metric **910** is based on the absolute values the beamformed image, values proportional to the modulus of the real and imaginary parts. A second plurality of values for the deviation metric **912** is based on the real values the beamformed image. Both the first plurality of values **910** and the second plurality of values **912** are optimal (e.g., peak) near the transmit velocity indicated by reference line **908.**

In some embodiments, the controller computes a deviation metric of a plurality of geometric parameters based on a first respective direction in a plurality of directions and a second respective direction in the plurality of directions. The first respective direction and the second respective direction are comparable. For example, the directions are 0° and +20° but not -20° and +20°. In some embodiments, the controller records a plurality of pairwise deviation metrics. A respective pairwise deviation metric is based on a first respective direction in the plurality of directions and a second respective direction in the plurality of directions. The controller computing an average value of the plurality of pairwise deviation metrics - e.g., mean, geometric mean.

FIG. 9B illustrates a second deviation metric over a plurality of trial values for the speed of sound. Graphic user interface **950** includes a plot **952,** a plurality of values for deviation metric **954,** and a legend **956.** The deviation metric shown is a variance normalized average value of a plurality of pairwise deviation metrics.

As indicated in legend **956,** the known transmit velocity is show as a vertical reference line **958.** The plurality of values for the second deviation metric **954** includes a first plurality of values for the second deviation metric **960** based on the absolute values the beamformed image. The plurality of values for the second deviation metric **954** includes a first plurality of values for the second deviation metric **962** based on the real values the beamformed image. Both the first plurality of values **960** and the second plurality of values **962** are optimal near the transmit velocity indicated by reference line **908.**

For methods taught herein, the various acts may be performed in a different order than that illustrated or described. Additionally, the methods can omit some acts, combine acts, split an act, and/or employ additional acts. For methods taught herein, the various acts may be performed by one or more circuits, for instance, one or more hardware processors.

The word "a" or "an" when used in conjunction with the terms "comprise", "include", "comprising", or "including" in the claims or the specification may mean "one", "one or more", "at least one", and "a plurality" unless the content dictates otherwise. Similarly, the word "another" means "additional" or "at least a second" unless the content clearly dictates otherwise.

The terms "coupled", "coupling" or "connected" as used herein can have several different meanings depending on the context in which these terms are used. For example, the terms coupled, coupling, or connected can have a mechanical or electrical connotation. For example, as used herein, the terms coupled, coupling, or connected can indicate that two elements or devices are directly connected to one another or connected to one another through one or more intermediate elements or devices via an electrical element, electrical signal or a mechanical element depending on the particular context. The term "and/or" herein when used in association with a list of items means any one or more of the items comprising that list.

As used herein, a reference to "about", "approximately", or "near" a number, or to being "substantially" equal to a number, means being within +/- 10% of that number.

While the disclosure has been described in connection with specific embodiments, it is to be understood that the disclosure is not limited to these embodiments, and that the skilled person may carry out alterations, modifications, and variations of these embodiments without departing from the scope of the disclosure.

It is furthermore contemplated that any part of any aspect or embodiment discussed in this specification can be implemented or combined with any part of any other aspect or embodiment discussed in this specification.

**Claims**

1. A method of operation for an ultrasonic inspection system, the method comprising:

   transmitting a plurality of ultrasonic pulses in a plurality of directions from an ultrasonic transducer array;
   receiving a plurality of reflections from a target, wherein a respective reflection in the plurality of reflections corresponds to at least one respective pulse in the plurality of pulses;

for a plurality of trial values for a speed of sound, and until a termination condition is met, the method includes:

selecting an instant trial value from amongst the plurality of trial values for the speed of sound,
creating a plurality of images from the plurality of reflections and the instant trial value from the plurality of trial values for the speed of sound, wherein a respective image corresponds with a respective direction in the plurality of directions,
extracting from the plurality of images a plurality of geometric parameters for the target,
computing a deviation metric amongst the plurality of geometric parameters; and

returning an optimal value for the speed of sound from amongst the plurality of trial values for the speed of sound, wherein the optimal value for the speed of sound optimizes the deviation metric.

2. The method of claim 1 further comprising checking of the termination condition is met.

3. The method of claims 1 or 2 further comprising returning at least one of: the plurality of reflections from the target, the plurality of trial values for the speed of sound, the plurality of images, and the plurality of geometric parameters.

4. The method of claims 1 - 3, wherein extracting from the plurality of images a plurality of geometric parameters for the target, further comprises:
extracting from the plurality of images a spatially varying geometric parameter of the target and a spatially invariant geometric parameter of the target, wherein preferably the target is a tubular, and the method further comprises:
extracting from the plurality of images a center of the target and a curvature of the target.

5. The method of claims 1 - 4 further comprising preprocessing the plurality of reflections by at least one operation selected from the group consisting of:

extracting a real part of at least one reflection in the plurality of reflections,
extracting an imaginary part of at least one reflection in the plurality of reflections,
extracting an absolute value of at least one reflection in the plurality of reflections,
extracting a phase of at least one reflection in the plurality of reflections,
excluding at least one reflection in the plurality of reflections which corresponds to a short time of flight,
excluding at least one reflection in the plurality of reflections which corresponds to a long time of flight,
excluding at least one reflection in the plurality of reflections which corresponds to a multiple echo, and
adjusting an amplitude of at least one reflection in the plurality of reflections.

6. The method of claims 1 - 5, wherein computing a deviation metric amongst the plurality of geometric parameters, further comprises:
computing the deviation metric of the plurality of geometric parameters based on a first respective direction in the plurality of directions and a second respective direction in the plurality of directions, wherein the first respective direction and the second respective direction are comparable.

7. The method of claims 1 - 6 further comprising:

recording a plurality of pairwise deviation metrics, wherein a respective pairwise deviation metric is based on a first respective direction in the plurality of directions and a second respective direction in the plurality of directions; and
computing an average value of the plurality of pairwise deviation metrics, said method preferably further comprising:

computing a standard deviation value of the plurality of pairwise deviation metrics;
dividing the average value of the plurality of pairwise deviation metrics by the standard deviation value of the plurality of pairwise deviation metrics; and
identifying the optimal value for the speed of sound from amongst the plurality of trial values for the speed of sound, wherein the optimal value for the speed of sound optimizes the quotient of the average value of the plurality of pairwise deviation metrics and the standard deviation value of the plurality of pairwise deviation metrics.

8. The method of claims 1 - 7, wherein transmitting the plurality of ultrasonic pulses in the plurality of directions from the ultrasonic transducer array is for a first sector of the target, the method further comprises:

transmitting a second plurality of ultrasonic pulses in a second plurality of directions from the ultrasonic transducer array; and
receiving a second plurality of reflections from a second sector of the target, wherein a respective reflection in the second plurality of reflections corresponds to at least one respective pulse in the second plurality of pulses.

9. The method of claims 1 -8, wherein the plurality of trial values for the speed of sound are based on one or more of a temperature sensor value and a pressure sensor value.

10. A system for ultrasonic inspection of a target, the system comprising:

an inspection probe having an ultrasonic transducer array and on-tool processor programmed to cause the ultrasonic transducer array to:

a) transmit a first plurality of ultrasonic pulses in a first plurality of directions;
b) receive a first plurality of reflections from a first sector of the target, wherein a respective reflection in the first plurality of reflections corresponds to at least one respective pulse in the first plurality of ultrasonic pulses; and
c) store the first plurality of reflections,

and

at least one non-transitory storage device communicatively coupled to at least one processor and which stores processor-executable instructions, which cause the at least one processor to iterate over at least two trial values for a speed of sound and in each respective iteration:

i) select an instant trial value for the speed of sound from amongst the at least two trial values for the speed of sound,
ii) create a plurality of images from the first plurality of reflections and the instant trial value from the speed of sound, wherein a respective image corresponds with a respective direction in the first plurality of directions,
iii) extract from the plurality of images a plurality of geometric parameters for the first sector of the target, and
iv) compute a deviation metric amongst the plurality of geometric parameters, wherein preferably the ultrasonic transducer array is a radial imager transducer array.

11. The system of claim 10, wherein, when executed, the processor-executable instructions further cause the at least one processor to:
return a result selected from:

an optimal value for the speed of sound from amongst the at least two trial values for the speed of sound, wherein the optimal value for the speed of sound optimizes the deviation metric;
the first plurality of reflections from the target;
the at least two trial values for the speed of sound;
the plurality of images; and
the plurality of geometric parameters.

12. The system of claims 10 or 11, wherein, when executed, the processor-executable instructions further cause the at least one processor to:
extract from the plurality of images a spatially varying geometric parameter of the target, and a spatially invariant geometric parameter of the target., wherein preferably, when executed, the processor-executable instructions further cause the at least one processor to:
extract from the plurality of images a center of the target and a curvature of the target.

13. The system of claims 10 - 12, wherein, when executed, the processor-executable instructions further cause the at least one processor to:

record a plurality of pairwise deviation metrics, wherein a respective pairwise deviation metric is based on a first respective direction in the plurality of directions and a second respective direction in the plurality of directions; and
compute an average value of the plurality of pairwise deviation metrics, wherein preferably, when executed, the processor-executable instructions further cause the at least one processor to:

compute a standard deviation value of the plurality of pairwise deviation metrics;
divide the average value of the plurality of pairwise deviation metrics by the standard deviation value of the plurality of pairwise deviation metrics; and
identify the optimal value for the speed of sound from amongst the at least two trial values for the speed of sound, wherein the optimal value for the speed of sound optimizes the quotient of the average value of the plurality of pairwise deviation metrics and the standard deviation value of the plurality of pairwise deviation metrics.

14. The system of claims 10 - 13 further comprising a plurality of centralizers coupled to the frame.

15. The system of claims 10 - 14 wherein the inspection probe further including:

one or more of a temperature sensor and a pressure sensors; and

the ultrasonic transducer array coupled to the inspection probe by a sensor arm;
wherein the at least two trial values are based on one or more of a temperature sensor value and a pressure sensor value; and
extracting the plurality of geometric parameters is further based on a position of the sensor arm.

EP 4 664 104 A1

FIG. 1

FIG. 2

FIG. 3

EP 4 664 104 A1

400

402 — Receive information characterizing a plurality of reflections of ultrasonic pulses sent in a plurality of directions off a target.

404 — Select a plurality of values for the speed of sound.

406 — Create a plurality of images from the reflections where an image corresponds with a direction in the plurality of directions, and value of the speed of sound.

408 — Extract from the plurality of images a plurality of geometric parameters for the target.

412 — Compute a deviation metric amongst the plurality of geometric parameters.

414 — Select a value of the speed of sound that optimizes the deviation metric.

416 — Select at least one image based on the optimal speed of sound value.

FIG. 4

FIG. 5

600

602
Acquire reflection data for a plurality of angles.

604
Pre-process the data.

606
Select a trial velocity ($v_t$).

608

610
Create an image for the first angle ($I_1$).  ●●●  Create an image for the n$^{th}$ angle ($I_n$).

612
Extract geometric parameters from $I_1$.  ●●●  Extract geometric parameters from $I_n$.

614

616
Exclude non-comparable angles.

618
Compute deviation – error in fit.

No

620
Terminate?

Yes

622
Return an optimal speed of sound value.

FIG. 6

700

Transmit ultrasonic pulses in a plurality of directions from an ultrasonic transducer array and towards a target in a sector. — 702

Receive, at the ultrasonic transducer array, a plurality of reflections from at least one target in the sector. — 704

No ← Terminate? — 706

Yes

FIG. 7A

750

Move probe. — 752

Acquire data. — 754

No ← Terminate? — 756

Yes

FIG. 7B

FIG. 8

EP 4 664 104 A1

FIG. 9A

FIG. 9B

Europäisches
Patentamt

European
Patent Office

Office européen
des brevets

## EUROPEAN SEARCH REPORT

**Application Number**

EP 25 18 2361

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAO DI ET AL: "Real-Time Speed-of-Sound Estimation In Vivo via Steered Plane Wave Ultrasound", IEEE TRANSACTIONS ON ULTRASONICS, FERROELECTRICS, AND FREQUENCY CONTROL, IEEE, USA, vol. 71, no. 6, 29 April 2024 (2024-04-29), pages 673-686, XP011972380, ISSN: 0885-3010, DOI: 10.1109/TUFFC.2024.3395490 [retrieved on 2024-04-30] | 1-11,13 | INV. G01N29/024 B06B1/06 G10K9/125 G01N29/07 G01N29/06 G01N29/26 G10K11/34 G01N29/04 |
| Y | * pages 1-14; figures 1-9 * | 12,14,15 | |
| Y | EP 4 016 072 A1 (BAKER HUGHES HOLDINGS LLC [US]) 22 June 2022 (2022-06-22) * paragraphs [0001] - [0095]; figures 1-4 * | 15 | |
| Y | WO 2022/269395 A1 (DARKVISION TECH INC [CA]) 29 December 2022 (2022-12-29) * paragraphs [0001] - [0089]; figures 1-15 * | 12,14 | |

**TECHNICAL FIELDS SEARCHED (IPC)**

G01N
B06B
G10K

The present search report has been drawn up for all claims

| Place of search | Date of completion of the search | Examiner |
|---|---|---|
| The Hague | 7 November 2025 | Gassmann, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 2361

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | | Publication date | Patent family member(s) | | Publication date |
|---|---|---|---|---|---|
| EP 4016072 | A1 | 22-06-2022 | CA | 3141821 A1 | 20-06-2022 |
| | | | EP | 4016072 A1 | 22-06-2022 |
| | | | US | 2022196608 A1 | 23-06-2022 |
| | | | US | 2022341882 A1 | 27-10-2022 |
| WO 2022269395 | A1 | 29-12-2022 | EP | 4359820 A1 | 01-05-2024 |
| | | | GB | 2608148 A | 28-12-2022 |
| | | | US | 2024264122 A1 | 08-08-2024 |
| | | | WO | 2022269395 A1 | 29-12-2022 |

EPO FORM P0459

For more details about this annex : see Official Journal of the European Patent Office, No. 12/82